# EUROPÄISCHE PATENTANMELDUNG

(11) **EP 1 130 853 A1**
(43) Veröffentlichungstag der Anmeldung: **05.09.2001**
(21) Anmeldenummer: 00104147.4
(22) Anmeldetag: 29.02.2000
(51) Int. Cl.: H04L 12/437, H04Q 11/04

(54) **Schaltungsanordnung zum Ersatzschalten von Übertragungseinrichtungen in MPLS-Pakete führende Ringarchitekturen**

(71) Anmelder: SIEMENS AKTIENGESELLSCHAFT, 80333 München (DE)
(72) Erfinder: Klink, Joachim, Dipl.-Ing., 81377 München (DE)

(57) **Zusammenfassung**

Die Ersatzschaltung von ATM-Zellen in ringförmigen Strukturen wird beim Stand der Technik unter der Verwendung von linearen Strukturen effizient gesteuert. Erfindungsgemäß wird dies auf ringförmige MPLS-Netzarchitekturen übertragen, indem lineare MPLS-Strukturen zu einer ringförmigen MPLS-Struktur geformt werden, und zwei gegenläufige unidirektionale MPLS-Verbindungen logisch miteinander assoziiert werden, die jeweils die gleichen Vermittlungseinrichtungen verbinden, wobei Betriebsstrecke und Ersatzstrecke über unterschiedliche physikalische Wege geführt sind.

## Beschreibung

Die Erfindung betrifft eine Schaltungsanordnung gemäß dem Oberbegriff des Patentanspruch 1.

Eine Schaltungsanordnung zum Ersatzschalten von Übertragungseinrichtungen in Ringarchitekturen ist bereits aus der deutschen Patentanmeldung DE 197 039 93.6 bekannt.

Diese bekannte Schaltungsanordnung bezieht sich auf Übertragungseinrichtungen, über die Informationen nach einem asynchronen Transfermodus (ATM) geleitet werden. Hierbei ist eine Übertragungseinrichtung zur bidirektionalen Übertragung von Digitalsignalen vorgesehen, bei der zwei als Endstellen fungierende Vermittlungseinrichtungen über eine Mehrzahl von Betriebsstrecken und eine Ersatzstrecke miteinander verbunden sind. Die beiden Endstellen enthalten jeweils Überwachungsvorrichtungen zur Feststellung von Übertragungsstörungen. Eine durch eine Überwachungsvorrichtung steuerbare Schaltvorrichtung verbindet eine Empfangsvorrichtung in einem ersten Schaltzustand mit der Betriebsstrecke und in einem zweiten Schaltzustand mit der Ersatzstrecke.

Nachteilig an dieser bekannten Schaltungsanordnung ist, daß sie sich ausschließlich auf ATM-Übertragungseinrichtungen bezieht. Im Internet werden Informationen über eine Mehrzahl von Netzknoten, die als Router ausgebildet sein können, dem empfangenden Teilnehmer zugeführt. Zwischen den Routern können MPLS-Netze angeordnet sein. MPLS-Netze sind aber in der bekannten Schaltungsanordnung überhaupt nicht angeprochen.

Der Erfindung liegt die Aufgabe zugrunde, eine Schaltungsanordnung der eingangs genannten Art derart weiterzubilden, daß Informationen, die nach einem Internetprotokoll übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß eine Mehrzahl von, aus MPLS-Vermittlungseinrichtungen gebildeten linearen Übertragungsabschnitten zu einem Ringsystem zusammengefügt werden. Ein Übertragungsabschnitt wird dabei von einer Betriebsstrecke und/oder einer Ersatzstrecke gebildet. Ferner werden zwei gegenläufige unidirektionale MPLS-Verbindungen logisch miteinander assoziiert, die jeweils die gleichen MPLS-Vermittlungseinrichtungen verbinden,wobei Betriebsstrecke und Ersatzstrecke über unterschiedliche physikalische Wege geführt sind. Die MPLS-Vermittlungseinrichtungen sind dabei als Label Switched Router ausgebildet. Damit ist der Vorteil verbunden, daß MPLS-Verbindungen im Störungsfall der Betriebsstrecke in derart weitergebildeten Ringsystemen in effizienter Weise aufrechterhalten werden können.

Vorteilhafte Weiterbildungen der Erfindung sind in den Unteransprüchen angegeben.

Die Erfindung wird im folgenden anhand eines Ausführungsbeispiels näher erläutert.

Es zeigen:
- Figur 1: ein in das Internet eingebundenes MPLS-Netz,
- Figur 2: Eine Konfiguration zur Übertragung von MPLS-Paketen in einer linearen 1+1-Struktur,
- Figur 3: Eine Konfiguration zur Übertragung von MPLS-Paketen in einer linearen 1:1-Struktur,
- Figur 4: die erfindungsgemäße Schaltungsanordnung,

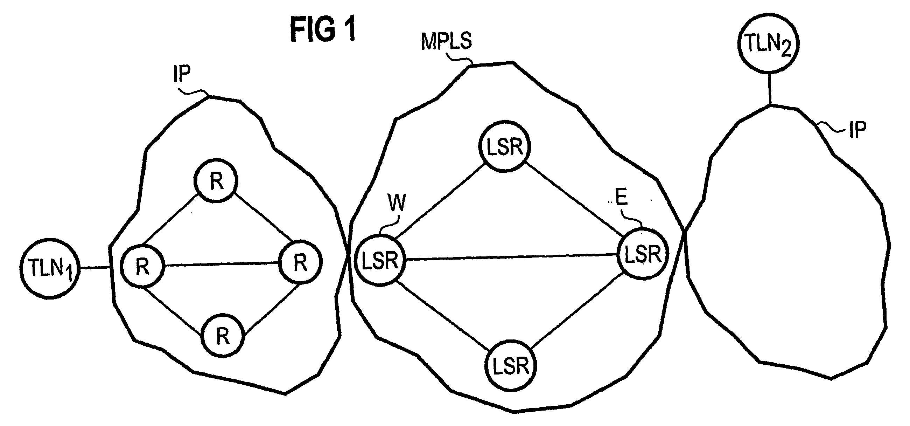

In Fig. 1 ist beispielhaft aufgezeigt, wie Informationen ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz (Multiprotocol Packet Label Switching) eingefügt, durch das Informationen in Form von MPLS-Paketen verbindungsorientiert durchgeschaltet werden. Dieses Netz weist eine Mehrzahl von miteinander vermaschten Routern auf. In einem MPLS-Netz können dies sogenannte Label Switched Router (LSR) sein. Einer der Router ist als sendende Einrichtung W und ein weiterer als empfangende Einrichtung E bezeichnet.

MPLS-Pakete weisen jeweils einen Kopfteil sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

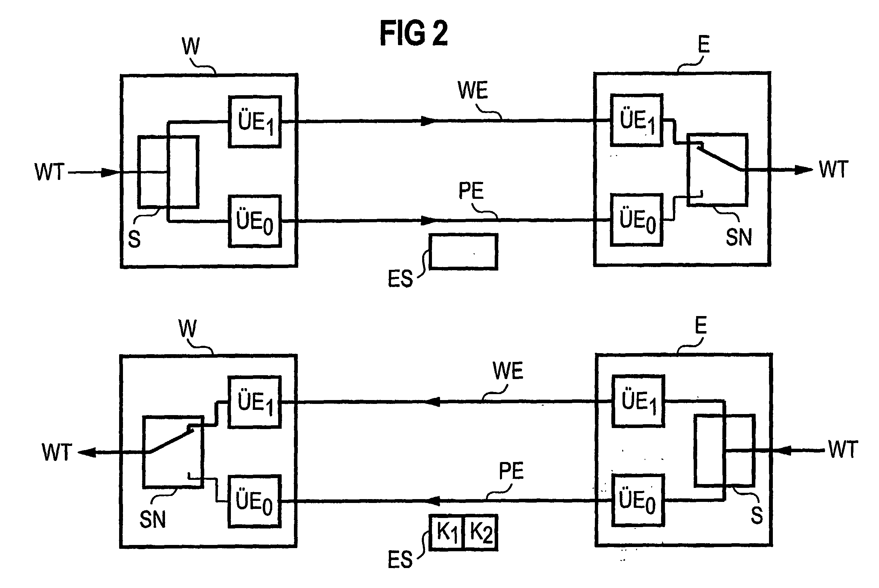

In Fig. 2 sind beispielshaft zwei Knoten eines MPLS-Netzes in einer linearen Konfiguration aufgezeigt, welche jeweils als Vermittlungseinrichtung W, E ausgebildet sind. In vorliegendem Ausführungsbeispiel wird davon ausgegangen, daß es sich bei diesen Vermittlungseinrichtungen um MPLS Cross Connect Vermittlungseinrichtungen handelt. Die Verwendung derart ausgebildeter Vermittlungseinrichtungen bedeutet jedoch keine Einschränkung der Erfindung, andere Vermittlungseinrichtungen wie z.B. ATM-Vermittlungseinrichtungen sind ebenso verwendbar. In Fig. 2 sollen nun MPLS-Pakete (Multiprotocol Label Switched Packets) von der als Label Switched Router W ausgebildeten Vermittlungseinrichtung zu der als Label Switched Router E ausgebildeten Vermittlungseinrichtung hin übertragen werden.

Fig. 2 zeigt eine lineare 1+1 Struktur. Ferner ist hier ein bidirektionaler Übertragungsfall dargestellt. Die Übertragung von MPLS-Paketen im MPLS-Netz ist unidirektional definiert. Demzufolge sind im bidirektionaler Übertragungsfall für die Hin - und Rückübertragung von einer Verbindung WT zugehörigen MPLS-Pakete zwischen dem Label Switched Router W und dem Label Switched Router E insgesamt 2 "Verbindungen" (eine für die Hinrichtung und eine für die Rückrichtung) aufzubauen. Eine "Verbindung" im MPLS-Netz wird als Label Switched Path (LSP) bezeichnet.

Die Label Switched Router W, E sind über eine Betriebsstrecke WE (WORKING ENTITY) sowie eine Ersatzstrecke PE (PROTECTION ENTITY) miteinander verbunden. Die Betriebsstrecke WE kann optional auch aus einer Mehrzahl von Betriebsstrecken ausgebildet sein. Weiterhin sind Schalteinrichtungen S (BRIDGE) aufgezeigt, über die die ankommenden MPLS-Pakete aufgenommen und die Betriebsstrecken WE zum Label Switched Router E hin übertragen werden. Fig. 2 sind ebenso Selektionseinrichtungen SN entnehmbar, deren Aufgabe darin besteht, die über die Betriebsstrecke WE übertragenen MPLS-Pakete dem Ausgang des Label Switched Routers E zuzuführen. Gemäß vorliegendem Ausführungsbeispiel sind die Selektionseinrichtungen SN als Koppelfeld ausgebildet. Das Koppelfeld SN ist sowohl im Label Switched Router W als auch im Label Switched Router E angeordnet.

Weiterhin sind in beiden Label Switched Router W, E Überwachungsvorrichtungen ÜE₀, ÜE₁ (PROTECTION DOMAIN SINK, PROTECTION DOMAIN SOURCE) aufgezeigt, die den Zustand bzw. die Qualität der über die Betriebstrecken WE übertragenen MPLS-Pakete überwachen. Beispielsweise werden die MPLS-Pakete der Verbindung mit der Nummer 1 WT₁ bevor sie über die Betriebsstrecke WE zum Label Switched Router E hin übertragen werden, in der Überwachungseinrichtung ÜE₁ des Label Switched Routers W mit Steuerinformation beaufschlagt, die die Überwachungseinrichtung ÜE₁ des empfangenden Label Switched Routers E entnimmt und überprüft. Anhand dieser Steuerinformation kann dann ermittelt werden, ob die Übertragung des MPLS-Paketes korrekt erfolgt ist oder nicht. Insbesondere kann hier ein Totalausfall (SIGNAL FAIL FOR WORKING ENTITY) der Betriebsstrecke WE ermittelt werden. Ebenso sind aber auch unter Verwendung bekannter Verfahren Verschlechterungen in der Übertragungsqualität (SIGNAL DEGRADE) ermittelbar.

Die Überwachungsvorrichtungen ÜE₁ schließen die Betriebsstrecke WE auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE dienen. Weiterhin werden hierüber Ersatzschalteprotokolle ES übertragen, so daß die Intaktheit der Ersatzstrecke oberste Priorität hat.

In jeder der Label Switched Router W, E sind ferner zentrale Steuereinrichtungen ZST angeordnet. Diese beinhalten jeweils lokale und globale Prioritätstabellen, in denen Zustand und Priorität des lokalen Label Switched Routers W (lokale Prioritätstabelle) sowie Zustand und Priorität des lokalen und des verbleibenden Label Switched Routers E (globale Prioritätstabelle) geführt werden. Durch die Einführung der Prioritäten wird erreicht, daß beim gleichzeitigen Auftreten mehrerer Ersatzschalteanforderungen festgelegt ist, welche Betriebstrecke im Falle des Vorhandenseins mehrerer Betriebsstrecken ersatzzuschalten ist. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von einer der Betriebsstrecken gesteuerte Ersatzschalteanforderung, der eine niedrigere Priorität zugewiesen ist, wird somit zurückgewiesen.

Die zentralen Steuereinrichtungen ZST der Label Switched Router W, E tauschen Informationen in einem Ersatzschalteprotokoll ES aus. Dieses Protokoll wird über die Ersatzstrecke PE übertragen und von der zugeordneten Überwachungseinrichtung ÜE₀ des jeweils empfangenden Label Switched Routers entnommen, und der betreffenden zentralen Steuereinrichtung ZST zugeführt. Weiterhin wird in der zentralen Steuervorrichtung ZST dafür Sorge getragen, daß im Fehlerfall die Schaltvorrichtungen S in entsprechender Weise angesteuert werden.

Im Protokoll ES sind Informationen K₁, K₂ abgelegt. Bei ersteren handelt es sich um Informationen bezüglich der generierten Ersatzschalteanforderung, während es sich bei den letzteren um Informationen bezüglich der momentanen Zustände der Schalteinrichtungen handelt. Das Protokoll ES wird jeweils bei Generierung einer Ersatzschalteanforderung zwischen den beiden Label Switched Router W, E ausgetauscht. In einer speziellen Ausgestaltung der Erfindung wird vorgesehen, das Protokoll ES zyklisch zwischen beiden Label Switched Routern W, E zu übertragen.

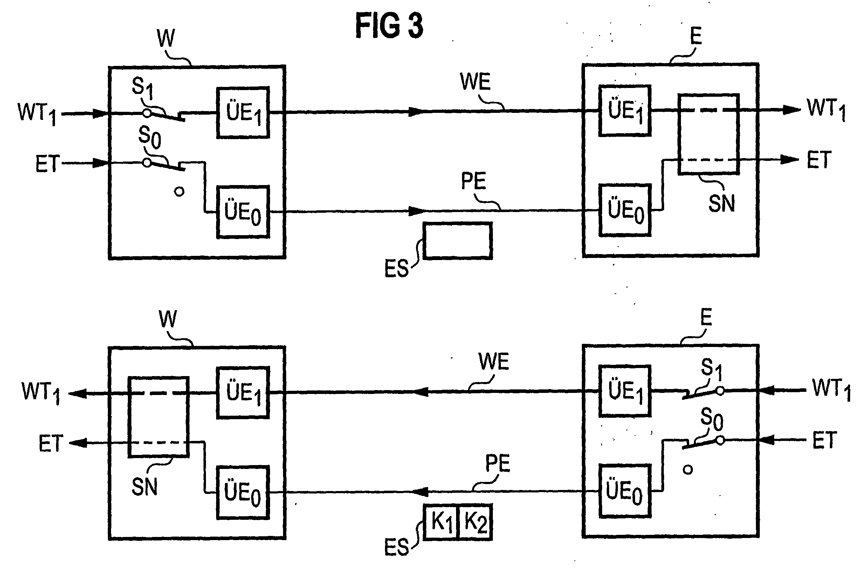

In Fig. 3 ist eine weitere lineare Struktur aufgezeigt, mit der MPLS-Pakete ersatzgeschaltet werden können. Hierbei handelt es sich um eine 1:1 Struktur. Der Unterschied zu der in Fig. 2 aufgezeigten 1+1 Struktur besteht darin, daß die dort aufgezeigten Brückeneinrichtungen S als Schaltvorrichtungen S₀, S₁ ausgebildet sind. Die Selektionseinrichtung SN ist hier ebenso als Koppelfeld ausgebildet, wie in Fig. 2. Die über die Ersatzstrecke PE geleiteten MPLS-Pakete werden diesem Koppelfeld zugeführt. Hier wird nun die logische MPLS-Verbindungsnummer dem Paketkopf entnommen, ausgewertet und durch das Koppelfeld durchgeschaltet. Das Ansteuern von Schalteinrichtungen entfällt somit in diesem Fall in der empfangenden Vermittlungseinrichtung. In den beiden Label Switched Routern W, E gemäß Fig. 3 sind ebenso - nicht aufgezeigte - zentrale Steuereinrichtungen mit lokalen und globalen Prioritätstabellen enthalten.

Die Ersatzstrecke PE kann während dieser Zeit ungenutzt bleiben. Gegebenenfalls können aber auch während dieser Zeit Sonderdaten (EXTRA TRAFFIC) dem Label Switched Routern E zugeführt werden.

Das Protokoll ES ist hier in anderer Weise ausgebildet, als im ersten Fall. So sind hier zusätzlich zu den bereits im ersten Fall angesprochenen Informationen bezüglich der generierten Ersatzschalteanforderung weitere Informationen abgelegt. Dabei handelt es sich um Informationen bezüglich der momentanen Zustände der Schaltvorrichtungen S₀, S₁. Im Fehlerfall müssen die Schaltvorrichtungen S₀, S₁ in entsprechender Weise gesteuert werden. Das Protokoll wird jeweils bei Generierung der Ersatzschalteanforderung zwischen den beiden Label Switched Routern W, E ausgetauscht. In einer speziellen Ausgestaltung der Erfindung wird vorgesehen, das Protokoll ES zyklisch zwischen beiden Label Switched Routern W, E zu übertragen.

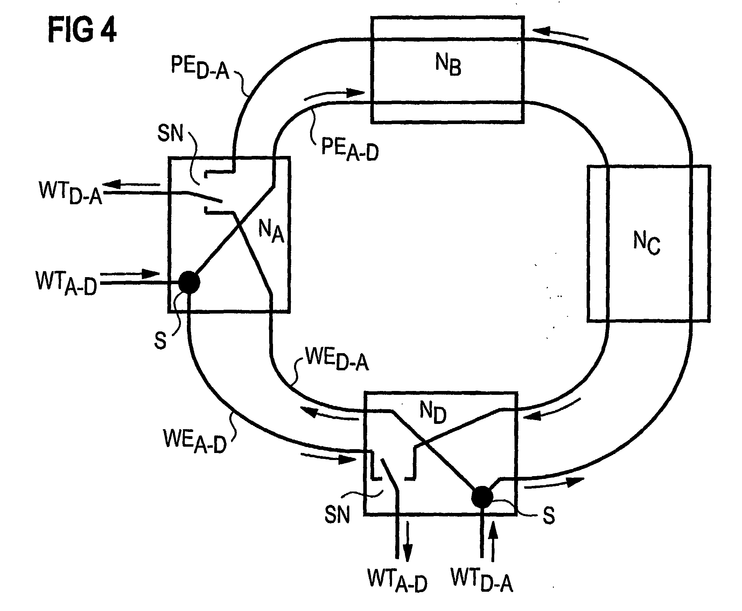

In Fig. 4 ist die erfindungsgemäße Schaltungsanordnung aufgezeigt (Dedicated Protection). Dedicated Protection bedeutet, daß die Bandbreite pro MPLS-Switched Path sowohl auf der Betriebsstrecke WE als auch auf der Ersatzstrecke PE fest reserviert ist. Die Label Switched Router sind so geschaltet, daß sich ein geschlossener Ring ergibt. Gemäß vorliegendem Ausführungsbeispiel soll dabei dieser Ring aus linearen Verbindungsabschnitten aufgebaut sein, wie sie gemäß Fig. 2 oder Fig. 3 aufgezeigt sind. Gemäß vorliegendem, in Fig. 4 beschriebenen Ausführungsbeispiel soll der Ring aus den in Fig. 2 aufgezeigten linearen 1+1 Strukturen gebildet werden, ohne daß damit eine Bevorzugung dieser Struktur angedeutet werden soll.

In Fig. 4 sind Label Switched Router N_{A}, N_{B}, N_{c} sowie N_{D}, aufgezeigt. Jeweils zwei Label Switched Router schließen dabei Übertragungsabschnitte ab. Am Beispiel der Label Switched Router N_{A} und N_{D} sind dies die Verbindungsabschnitte WE_{A-D_} sowie WE_{D-A}. Am Beispiel der Label Switched Router N_{A} sowie N_{B} oder N_{B}, N_{C} oder N_{C}, N_{D} sind dies die Verbindungsabschnitte PE_{A-D} sowie PE_{D-A}.

Gemäß Fig. 4 weist jede dieser Label Switched Router eine Brückeneinrichtung S sowie eine Selektionseinrichtung SN auf. Die Label Switched Router sollen derart geschaltet sein, daß zwischen den Label Switched Routern N_{A} und N_{D} die jeweils aktiven Betriebsstrecken WE_{A-D_} sowie WE_{D-A} angeordnet sind. Über diese Betriebsstrecken werden dann die über die Verbindung WT_{A-D_} sowie WT_{D-A} ankommenden MPLS-Pakete geleitet. Die Ersatzstrecken werden hingegen von dem Label Switched Router N_{A} über weitere Label Switched Router N_{B}, N_{C} zum Label Switched Router N_{D} geleitet. Dort verlassen die MPLS-Pakete den Ring, um weiteren Einrichtungen zugeführt zu werden.

Weiterhin ist der von den Label Switched Router gebildete Ring in Fig. 4 bidirektional ausgeprägt. Die Rückrichtung der Verbindung WT_{A-D} wird durch die Verbindung WT_{D-A} gebildet. Zum besseren Verständniss sei angemerkt, daß beide Verbindungen getrennt behandelt werden, obwohl es sich um eine bidirektionale Verbindung handelt. Wesentlich ist, daß der jeweiligen Betriebsstrecke jeweils genau eine Ersatzstrecke zugeordnet ist.Somit ist der Betriebsstrecke WE_{A-D_} die Ersatzstrecke PE_{A-D} und der als Rückrichtung fungierenden Betriebsstrecke WE_{D-A} die Ersatzstrecke PE_{D-A} zugeordnet. Ferner ist als Ausgestaltung der in Fig. 4 offenbarten Konfiguration auch ein unidirektionaler Übertragungsfall möglich.

Weiterhin sind in den einzelnen Label Switched Router - in Fig. 4 nicht aufgezeigte - Überwachungseinrichtungen angeordnet. Diese schließen jeweils die Betriebstrecken WE_{A-D_} und WE_{D-A} sowie die Ersatzstrecken PE_{A-D} sowie PE_{D-A} ab. Ferner werden alle über denselben physikalischen Pfad geführten MPLS-"Verbindungen" (Label Switched Path) logisch zu einer Gruppe zusammengefaßt, wobei für diese Gruppe 2 Ersatzschalteverbindungen erstellt werden. Die erste dieser Ersatzschalteverbindungen wird über die Betriebsstrecke WE geleitet (MPLS-Ersatzschalte-LSP; LSP= Label Switched Path), womit sie über den gleichen physikalischen Weg zwischen den Label Switched Routern W und E geführt ist, wie alle zugehörigen Einzelverbindungen. Die zweite dieser Ersatzschalteverbindungen wird über die Ersatzstrecke PE eingerichtet.

Im Gruppenersatzschalteverfahren werden nun nur noch diese beiden Ersatzschalteverbindungen auf Ausfälle und Störungen in den Überwachungseinrichtungen ÜE₁, ÜE₀ überwacht. Die Einzelverbindungen werden nicht mehr überwacht. Im Falle einer Ersatzschalteanforderung wird die prioritätsgesteuerte Ersatzschalteentscheidung wie bisher in der lokalen Prioritätslogik getroffen. Im Ersatzschaltefall werden allerdings alle zu einer Gruppe zugehörigen Einzelverbindungen gemeinsam durch die Schaltvorrichtung SN umgeschaltet. Dabei muß nur ein einziges Ersatzschalteprotokoll über die Ersatzstrecke PE abgewickelt werden.

Vorteilhaft daran ist, daß eine Vielzahl von Einzelverbindungen durch eine einzige Ersatzschalteverbindung und ein einziges Ersatzschalteprotokoll überwacht und ersatzgeschaltet werden können, um somit auf die im praktischen Betrieb am häufigsten vorkommenden Fehlerfälle angemessen reagieren zu können. Ferner wird lediglich ein Ersatzschalteprotokoll in der lokalen Prioritätstabelle eingetragen. Dies hat den Vorteil, daß das Ersatzschalteprotokoll im Störungsfall einer Betriebstrecke lediglich einmal zu übertragen ist. Dabei wird davon ausgegangen, daß andernfalls pro MPLS-Pfadnummer ein Ersatzschalteprotokoll zu übertragen wäre. Dies würde jedoch aufgrund der Vielzahl der MPLS-Verbindungen zu einer dynamischen Belastung des Ringes führen. Da aber eine Mehrzahl von Verbindungen mit derselben MPLS-Verbindungsnummer denselben Übertragungsabschnitt benutzen und eine mögliche Störung in der Regel den gesamten Übertragungsabschnitt betrifft, ist eine logische Bündelung der MPLS-Verbindungsnummer zu einer logischen Bündelnummer vorteilhaft.

Im folgenden soll davon ausgegangen werden, daß die Verbindung WT_{A-D} es erfordert, daß die zugehörigen MPLS-Pakete über den Label Switched Router N_{A} dem Ring zugeführt werden und über den Label Switched Reuter N_{D} denselben wieder verlassen. In diesem Fall werden somit die der Verbindung WT_{A-D} zugehörigen MPLS-Pakete der im Label Switched Router N_{A} angeordneten Brückeneinrichtung S zugeführt. Da diese fest eingestellt ist, werden die MPLS-Pakete zum Label Switched Router N_{D} sowohl über die Betriebsstrecke WE_{A-D} als auch über die Ersatzstrecke PE_{A-D} zugeleitet und verlassen dort den Ring.

Im störungsfreien Fall, d.h. wenn keine Betriebsstörung auf der aktiven Betriebsstrecke vorliegt, werden die MPLS-Pakete vom Label Switched Router N_{A} unmittelbar zum Label Switched Router N_{D} geleitet. Tritt hier jedoch eine Betriebsstörung auf, so wird dies von der im empfangenden Label Switched Router angeordneten Überwachungseinrichtung ermittelt. Dies soll in vorliegendem Fall der Label Switched Router N_{D} sein. Daraufhin wird von diesem unverzüglich das Ersatzschalteprotokoll über die zugeordnete Ersatzstrecke PE_{A-D} zum sendenden Label Switched Router, also dem Label Switched Router N_{A} zugeführt. Zeitgleich hierzu wird die Selektionseinrichtung SN in den Betriebszustand gesteuert, der MPLS-Pakete über die Ersatzstrecke PE_{A-D} entgegennimmt.

Die Überwachungseinrichtungen überprüfen ebenfalls den Betriebszustand auf den Ersatzstrecken. Werden beispielsweise MPLS-Pakete über die Betriebsstrecke WE_{A-D} übertragen und wird nun vom empfangenden Label Switched Router, also dem Label Switched Router N_{D} ein Störungsfall auf der zugeordneten Ersatzstrecke PE_{A-D} ermittelt, so wird über im Ersatzschalteprotokoll abgelegten Informationen dies dem sendenden Label Switched Router N_{A} mitgeteilt. Dadurch wird verhindert, daß im Falle einer zusätzlichen Störung auf der aktiven Betriebsstrecke WE_{A-D} ein Umschalten auf eine störungsbehaftete Ersatzstrecke PE_{A-D} erfolgt.

Erfindungsgemäß wird das Ersatzschalteprotokoll ES lediglich beim Auftreten von Störungen ausgetauscht, ein zyklischer Austausch kann aber ebenfalls gesteuert werden. Ebenso kann der Austausch des Ersatzschalteprotokolls verbindungsindividuell pro MPLS-Verbindungsnummer erfolgen. Dabei muß jedoch berücksichtigt werden, daß in diesen Fällen eine dynamische Zusatzbelastung des Ringes erfolgt. Vorteilhaft hierbei ist jedoch, daß verbindungsindividuelle Störungen bezüglich der MPLS-Verbindungsnummer mit einer derartigen Vorgehensweise behandelt werden können. Mit der bevorzugten Ausführungsform der Gruppenersatzschaltung kann lediglich der - am häufigsten auftretende Strörungsfall auf der Trasse - behandelt werden.

Abschließend sei angemerkt, daß zwar der Ring bei vorliegendem Ausführungsbeispiel aus linearen 1+1 Strukturen aufgebaut ist. Die Verwendung einer 1:1 Struktur gemäß Fig. 3 bringt aber weitere Vorteile. Zwar ist das Ersatzschalteprotokoll hier komlexer aufgebaut, allerdings können hier Sonderdaten über die Ersatzstrecke während der störungsfreien Zeit auf der Betriebsstrecke übertragen werden. Als Sonderdaten können dabei Steuerdaten allgemeiner Art verwendet werden. Erfindungsgemäß können die Sonderdaten auch als spezielle Verkehrsdaten ausgebildet sein.

Als Sonderdaten kann über die Ersatzstrecke auch niederpriorer Verkehr übertragen werden, der nur dann im Netz übertragen wird, wenn ausreichend Ressourcen vorhanden sind. Der niederpriore Verkehr wird dann in diesem Fall durch Ersatzschalten des hochprioren Verkehrs automatisch verdrängt. In diesem Fall erfolgt die Verdrängung der Sonderdaten im Ersatzschaltefall nicht durch Umschalten der Schaltvorrichtung Sₒ in Figur 2, sondern durch Priorisierung des hochprioren Verkehrs gegenüber den niederprioren Sonderdaten in jeder Übertragungseinrichtung.

Die Betriebs- und Ersatzstrecken WE und PE müssen vor Inbetriebnahme eingerichtet werden. Dazu müssen Verbindungen zwischen den Label Switched Routern W und E, sowie gegebenenfalls an dazwischenliegenden Übertragungseinrichtungen eingerichtet (konfiguriert) werden.

Das Einrichten dieser Verbindungen erfolgt üblicherweise per TMN (Telekommunikations-Netzmanagement), kann aber auch mittels eines MPLS-Signalisierungsprotokolles erfolgen. Hierzu wird dabei per Signalisierung der Weg der Betriebs- bzw. Ersatzstrecke festgelegt. Zusätzlich wird über das Signalisierungsprotokoll Bandbreite in den Übertragungseinrichtungen reserviert, damit die Übertragung der Informationen über die Betriebs- bzw. Ersatzstrecke sichergestellt ist.

## Patentansprüche

1. Schaltungsanordnung zum Ersatzschalten von Übertragungseinrichtungen, mit
wenigstens zwei Vermittlungseinrichtungen (N_{A}, N_{D}), die jeweils einen aus Betriebsstrecken (WE_{A-D}, WE_{D-A}) und/oder Ersatzstrecken (PE_{A-D}, PE_{D-A}) gebildeten Übertragungsabschnitt abschließen, und zwischen denen Informationen über diesen Übertragungsabschnitt ausgetauscht werden, wobei im Falle einer Störung auf dem betreffenden Übertragungsabschnitt die hierüber bislang übertragen Informationen nach Maßgabe von Prioritätskriterien und logischen Verbindungsinformationen gegebenenfalls auf die Ersatzstrecke umgeleitet werden,
**dadurch gekennzeichnet**,
daß die Informationen in MPLS-Pakete eingefügt sind,
daß zwei gegenläufige unidirektionale MPLS-Verbindungen logisch miteinander assoziiert sind, wobei die beiden gegenläufigen MPLS-Verbindungen jeweils die gleichen Vermittlungseinrichtungen verbinden,
daß mehrere lineare Übertragungsabschnitte derart zusammengefügt sind, daß ein Ringleitungssystem gebildet ist, wobei Betriebsstrecke und Ersatzstrecke über unterschiedliche physikalische Wege geführt sind.

2. Schaltungsanordnung nach Anspruch 1,
**dadurch gekennzeichnet**,
daß ein unidirektionales Ringleitungssystem durch Verwenden von unidirektionalen Vermittlungseinrichtungen gebildet ist,
wodurch die logische Assoziation der beiden gegenläufigen, undirektionaler MPLS-Verbindungen entfällt.

3. Schaltungsanordnung nach Anspruch 1, 2,
**dadurch gekennzeichnet**,
daß der Betriebsstrecke (WE_{A-D}, WE_{D-A}) eine Ersatzstrecke (PE_{A-D}, PE_{D-A}) zugeordnet ist, und beide Strecken jeweils eine Priorität zugewiesen ist.

4. Schaltungsanordnung nach Anspruch 1, 2 oder 3,
**dadurch gekennzeichnet**,
daß im Ersatzschaltefall eine Ersatzschalteanforderung generiert wird, der weitere Prioritäten zugewiesen sind.

5. Schaltungsanordnung nach Anspruch 1, 2 oder 4,
**dadurch gekennzeichnet**,
daß die logische Verbindungsinformation die MPLS-Verbindungsnummer (Label Value) ist.

6. Schaltungsanordnung nach einem der vorstehenden Ansprüche,
**dadurch gekennzeichnet**,
daß die logische Verbindungsinformation einer MPLS-Verbindung die Nummer einer MPLS-Verbindungsgruppe ist, die aus einer Mehrzahl von MPLS-Verbindungen gebildet ist.

7. Schaltungsanordnung nach einem der vorstehenden Ansprüche,
**dadurch gekennzeichnet**,
daß lokale und globale Prioritätstabellen vorgesehen sind, in der die Rangfolge der Prioritäten festgelegt ist.

8. Schaltungsanordnung nach einem der vorstehenden Ansprüche,
**dadurch gekennzeichnet**,
daß bei Eintreffen einer Ersatzschalteanforderung in der empfangenden Vermittlungseinrichtung ein Ersatzschalteprotokoll generiert wird, das lediglich einmal über die Ersatzstrecke (PE) der sendenden Vermittlungseinrichtung zugeführt wird.

9. Schaltungsanordnung nach einem der vorstehenden Ansprüche,
**dadurch gekennzeichnet**,
daß Totalaufall und Verschlechterung einer Betriebsstrecke in der Überwachungseinrichtung der empfangenden Vermittlungseinrichtung ermittelbar sind.

10. Schaltungsanordnung nach einem der vorstehenden Ansprüche,
**dadurch gekennzeichnet**,
daß die Vermittlungseinrichtungen als MPLS-Crossconnect-Schalteinrichtungen ausgebildet sind.

11. Schaltungsanordnung nach einem der vorstehenden Ansprüche,
**dadurch gekennzeichnet**,
daß die Ersatzschaltung gegebenenfalls durch Ansteuern einer in der sendenden Vermittlungseinrichtung enthaltenden Schaltvorrichtung (S₀, S₁) sowie unter Verwendung einer in der empfangenden Vermittlungseinrichtung angeordneten Selektionseinrichtung (SN) erfolgt.

12. Schaltungsanordnung nach einem der vorstehenden Ansprüche,
**dadurch gekennzeichnet**,
daß über die Ersatzstrecke (PE) in betriebsstörungsfreien Zeiten Sonderdaten übertragen werden.

13. Schaltungsanordnung nach einem der vorstehenden Ansprüche,
**dadurch gekennzeichnet**,
daß die Sonderdaten als niederpriorer Verkehr ausgebildet sind, der im Falle eines Ersatzschaltens des hochprioren Verkehrs automatisch verdrängt wird.

14. Schaltungsanordnung nach einem der vorstehenden Ansprüche,
**dadurch gekennzeichnet**,
daß die Selektionseinrichtung (SN) als Koppelfeld und/ oder als einfaches Schaltelement ausgebildet ist.

15. Schaltungsanordnung nach einem der vorstehenden Ansprüche
**dadurch gekennzeichnet**,
daß die in der sendenden Vermittlungseinrichtung angeordnete Schaltvorrichtung (S) fest einstellbar ist.

16. Schaltungsanordnung nach einem der vorstehenden Ansprüche,
**dadurch gekennzeichnet**,
daß das Ersatzschalteprotokoll zyklisch zwischen der sendenden Vermittlungseinrichtung sowie der empfangenden Vermittlungseinrichtung ausgetauscht wird.

17. Schaltungsanordnung nach einem der vorstehenden Ansprüche,
**dadurch gekennzeichnet**,
daß eine Gruppenersatzschaltung vorgesehen ist, indem alle über denselben physikalischen Pfad geführten MPLS-Verbindungen logisch zu einer Gruppe zusammengefaßt werden, und für die derart geformte Gruppe wenigstens zwei Ersatzschalteverbindungen erstellt werden, wobei jeweils eine dieser Ersatzschalteverbindungen über eine Betriebsstrecke (WE) und eine weitere dieser Ersatzschalteverbindungen über die Ersatzstrecke (PE) eingerichtet wird.

18. Schaltungsanordnung nach einem der vorstehenden Ansprüche,
**dadurch gekennzeichnet**,
daß im Falle des Vorsehens einer Gruppenersatzschaltung von den Überwachungseinrichtungen (ÜE₀...ÜEₙ) lediglich die wenigstens zwei Ersatzschalteverbindungen überwacht werden.

19. Schaltungsanordnung nach einem der vorstehenden Ansprüche,
**dadurch gekennzeichnet**,
daß das Einrichten der über die wenigstens eine Betriebsstrecke (WE) geführten Verbindungen sowie der über die Ersatzstrecke (PE) geführten Verbindungen durch ein MPLS Signalisierungsprotokoll erfolgt, das auch Bandbreite in den Übertragungseinrichtungen reserviert und den Weg der Betriebsstrecke(n) (WE) und der Ersatzstrecke (PE) festlegt.
